# EUROPEAN PATENT APPLICATION

(11) **EP 2 180 222 A2**
(43) Date of publication of application: **28.04.2010**
(21) Application number: 09252256.4
(22) Date of filing: 22.09.2009
(51) Int. Cl.: F16L 27/08, F16L 41/02

(54) **Tube fitting**

(30) Priority: 23.10.2008 JP 2008273538
(71) Applicant: Yugen Kaisha Hama International, Okaya-shi Nagano 394-0034 (JP)
(72) Inventor: Hama, Tomio , THD Co. Ltd., Okaya-shi, Nagano 394-0035 (JP); Hauaue, Yuji , THD Co. Ltd., Okaya-shi, Nagano 394-0035 (JP)
(74) Representative: Gill, Stephen Charles

(57) **Abstract**

A tube fitting (1) which can change a position (angle) of a fitting part (4) to connect external tube (60) thereto is provided.

A tube fitting (1), which comprises a fitting part (4) at one end side of a body (2), and a installation screw part (3) at the other end side, wherein the body (2) includes a pipe path (20), inside of which fluid passes, the fitting part (4) includes an opening part (42) at the rear end thereof, to which external tube (60) is inserted, and a pipe path (40), inside of which fluid passes, the fitting part (4) being connected to a connecting part (24) provided in a side part of the body (2) so that the fitting part (4) is rotatable in a direction where an angle between center axis of the opening part (42) and center axis of the installation screw part (3) varies, one end of a pipe path (40) of the fitting part (4) communicates with the opening part (42) and the other end of the pipe path communicates with the pipe path (20) of the body (2) via the connecting part (24).

## Description

### BACKGROUND OF THE INVENTION

### Field of the Invention

The present invention relates to a tube fitting and particularly to a tube fitting, fitting part of which is capable of varying an angle that is connected to external tubes.

### Description of the Related Art

Tube fittings for connecting external tube are used in various devices/apparatus, some of which are arranged so as to be variable in angle of fitting part that is connected to external tubes.

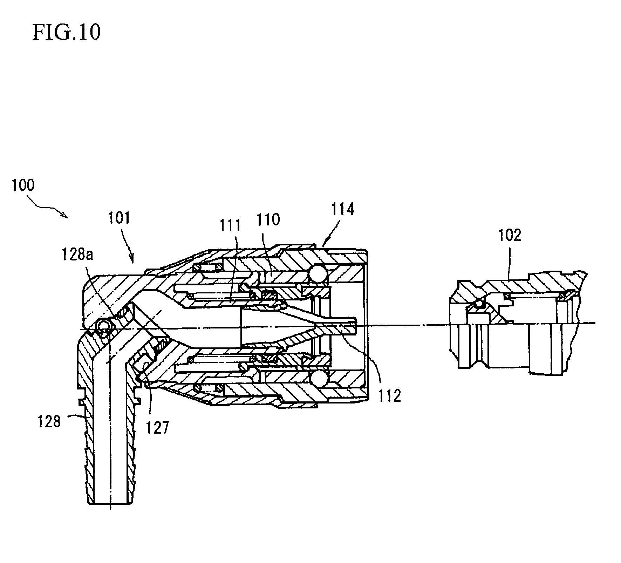

For example, there is a tube fitting 100 proposed in Patent Document No. 1, as a prior art related to a tube fitting in which the angle of fitting part is variable (refer to Fig. 10).

This tube fitting 100 is a tube fitting that is composed of a socket 101 and a plug 102, which are provided with a suitable locking mechanism 114 and can be connected in detachable manner, the socket 101 being equipped with a hose end 128 rotatably, which is bent substantially in a chevron shape, so that the direction thereof is variable, wherein a connecting hole 127 is formed in a main cylinder body 110 which constitutes the socket 101 in a inclined direction with reference to the axis line thereof, the base part 128a of the hose end 128 is supported/engaged rotatably in the connecting hole 127, further an internal cylinder body 111 is formed in the main cylinder body 110, such a structure is provided at the front end of the internal cylinder body 111 that a valve pushing body 112 is formed in separated manner, and thus the object is to shorten the total length of a sleeve and perform fluid flow communication without hindrance.

In addition, there is a tube fitting as another prior art, which is proposed in the patent document 2. This tube fitting seeks an object to prevent a hose from twisting or bending especially through making it possible to fit a hose detachably as well as variable in fitting angle to a nipple member provided on a faucet of water tube, by having a movable tube fitting part with angle variability.
Patent Document 1: Japanese Patent Application Laid-Open No. 2001-241585
Patent Document 2: Japanese Patent Application Laid-Open No. 11-336967

### SUMMARY

### Problems which may be solved by the invention

As illustrated in the above examples, various technique of tube fitting which has variable angle in the fitting part thereof has been proposed, however especially in a case where a plurality of fitting parts are provided and in similar cases, such a tube fitting that can vary freely the angle of the tube fitting and is outstanding in production cost as well as installation cost, at the same time the installation thereof can be easily implemented has been demanded.

It should be noted that in the tube fittings described in the patent document 1 and the patent document 2 do not have any expectation in application for a plurality of fitting parts, and naturally as for solution of problems which may occur in constitution and installation of such cases, no suggestions have been presented.

The present invention has been accomplished in view of aforementioned situation, and it is an object to provide a tube fitting which is suitable to apply especially for a constitution that has a plurality of fitting parts, and can change the position (angle) of fitting part to connect the external tubes.

### Means for solving the problems

The present invention can solve the problems by a solution method that is described in the following.

This tube fitting is a tube fitting which has such requirements that a fitting part is provided at one end side of a body and an installation screw part at the other end side thereof, the body includes a pipe path, inside of which fluid passes, the fitting part includes an opening part at the rear end thereof, to which an external tube is inserted and a pipe path in which fluid flows, the fitting part being connected to a connecting part provided in a side of the body so that the fitting part is rotatable in a direction where an angle between a center axis of the opening part and a center axis of the installation screw part varies, and one end of the pipe path of the fitting part communicates with the opening part, and the other end of the pipe path communicates with the pipe path of the body via the connecting part.

By this arrangement, rotation position (angle) of the fitting part with reference to the body can be varied and thus connecting direction of the external tube can be varied.

In addition, the fitting part may have a requirement that fitting part is provided in plurality. Especially, it is preferable to have such a constitution that the fitting part is provided at two places which oppose each other sandwiching the body and each fitting part is rotatable independently.

By this arrangement, through rotating a plurality of fitting parts can rotate independently, it is possible to connect to external tubes in various pattern variations.

In addition, the installation screw part may have requirements to include thread in the external circumference, tool connecting part inside to connect a rotation tool to rotate the installation screw part, and a pipe path where fluid passes.

By this arrangement, since the rotation tool is inserted to inside of the installation screw part, which enables to connect and rotate the rotation tool, regardless the position of the fitting part which is provided rotatably on the body, and even if the installation space is tight, the installation screw part is rotated and the tube fitting can be fit.

In addition, it may be a requirement that the body and the installation screw part are connected rotatably with each other so that both can rotate coaxially.

By this arrangement, retaining the direction of the fitting part being fixed, it is possible to rotate only the installation screw part.

In addition, it may be a requirement that a part of or the whole of the pipe path of the installation screw part is formed in a shape such that a rotation tool to rotate the installation screw part can be connected and is used simultaneously as the tool connecting part.

By this arrangement, it becomes possible to provide the tool connecting part inside of the installation screw part, and the double usage of the pipe path and the tool connecting part can make the installation screw part be downsized.

In addition, it may be a requirement that the portion in the pipe path of the installation screw part which is used simultaneously as the tool connecting part is formed to be a shape of through hole, the section of which is a polygon or an oval.

By this arrangement, a tool can be connected to the through hole which is used as a tool connecting part simultaneously and the installation screw part can be rotated.

In addition, it may be a requirement that the body is provided with a tool insertion opening with a dimension as large as capable of inserting and rotating the rotation tool, and a lid part which can seal and open the tool insertion opening.

By this arrangement, it becomes possible to insert the rotation tool from the tool insertion opening to rotate the installation screw part. Having the lid part, the tool insertion opening can be sealed when the fluid passes.

In addition, it may be a requirement that a flow rate control mechanism to adjust flow rate is provided between the fitting part and the installation screw part.

By this arrangement, it becomes possible to adjust the flow rate of passing fluid.

According to the present invention, it becomes possible to vary rotary position (angle) of the fitting part with respect to the body and thus the connecting direction of the external tubes can be varied.

### BRIEF DESCRIPTION OF THE DRAWINGS

Fig. 1 is a schematic view showing an example of a tube fitting according to the first embodiment of the present invention.
Fig. 2 is a schematic view showing a structure of the fitting part of the tube fitting in Fig. 1.
Fig. 3 is a schematic view showing a structure of the body of the tube fitting in Fig. 1.
Fig. 4 is a schematic view showing a structure of the installation screw part of the tube fitting in Fig. 1.
Fig. 5 is perspective views showing examples of a state that the fitting part of the tube fitting in Fig. 1 is rotated.
Fig. 6 is a schematic view showing a state that the lid part of Fig. 1 is removed.
Fig. 7 is a schematic view showing a structure of the lid part of the tube fitting in Fig. 1.
Fig. 8 is a schematic view showing a modification example of the tube fitting in Fig. 1.
Fig. 9 is a schematic view showing an example of a tube fitting according to the second embodiment of the present invention.
Fig. 10 is a schematic view showing an example of a tube fitting according to a conventional embodiment.

### DESCRIPTION OF EMBODIMENTS

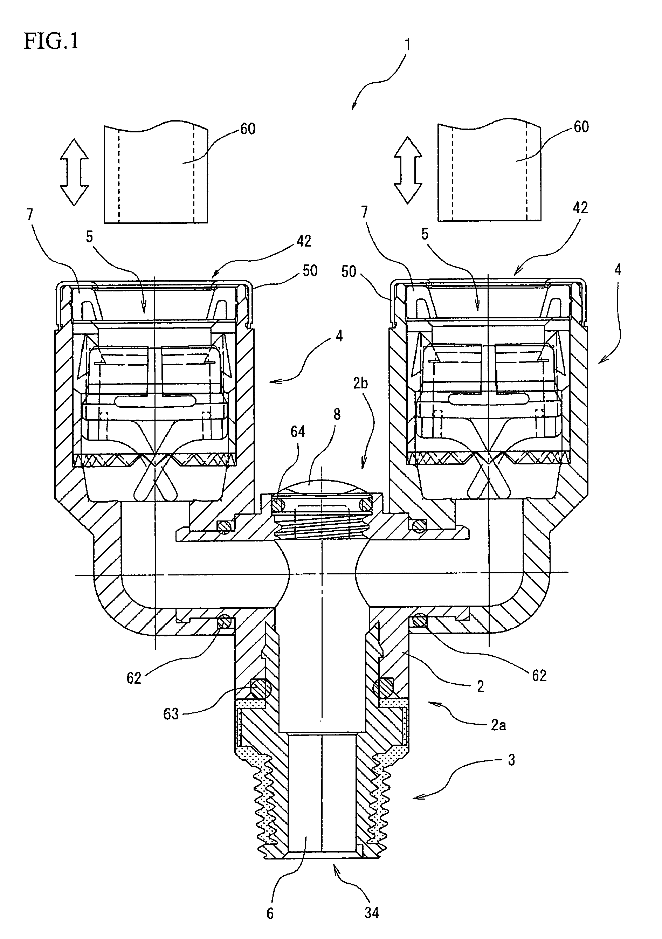

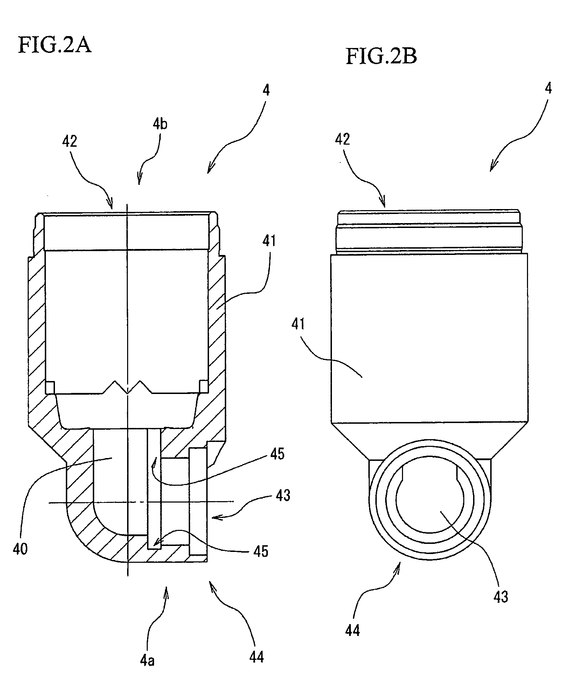

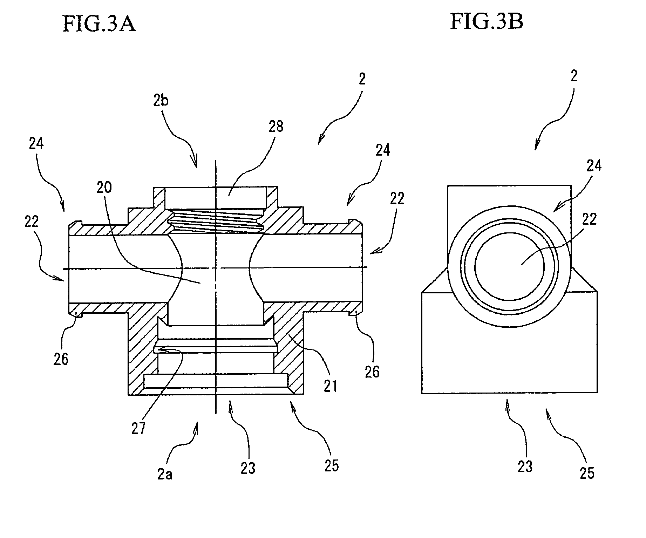

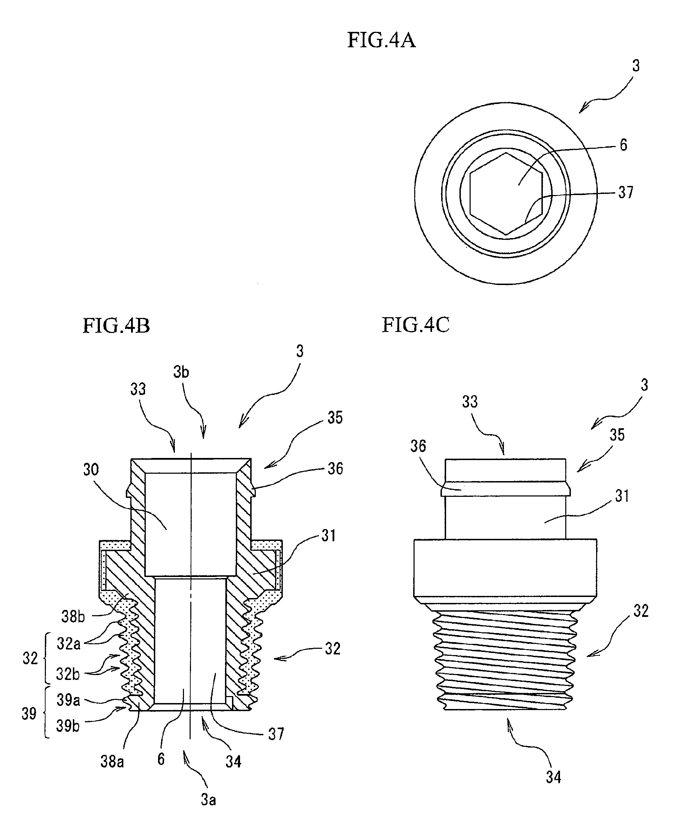

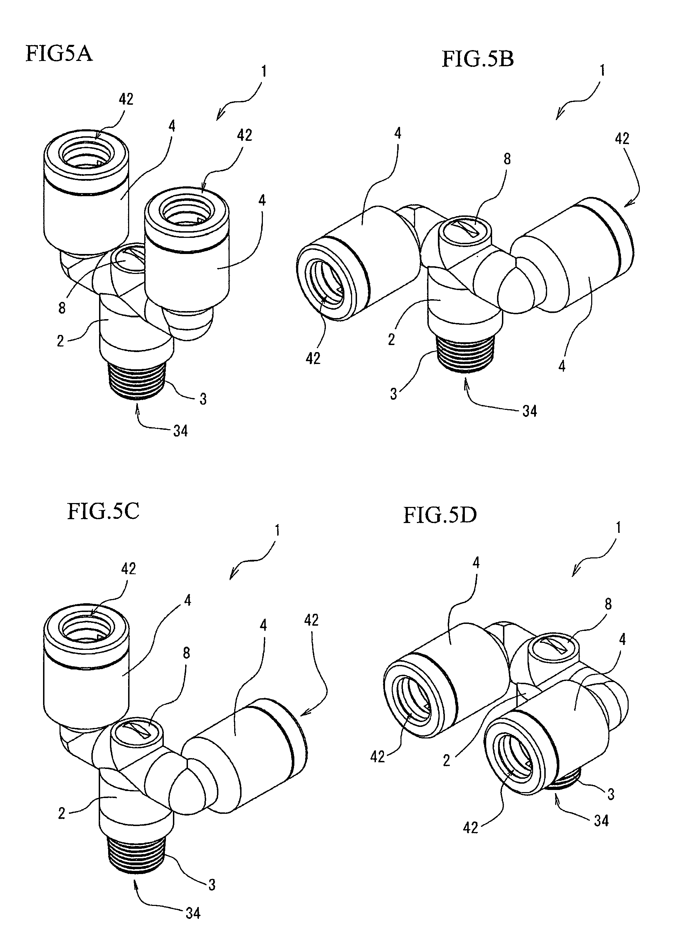

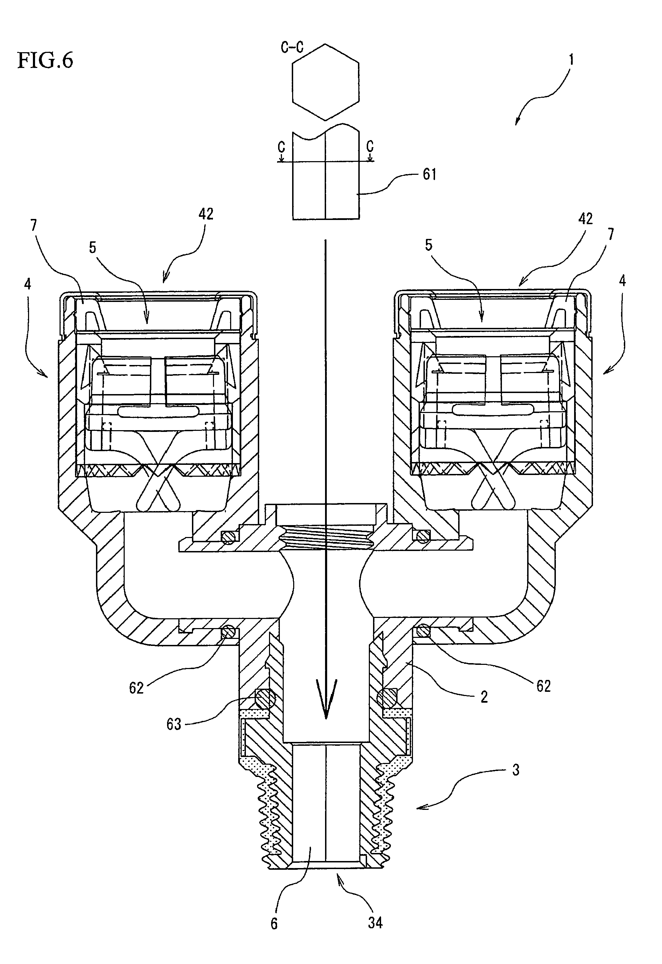

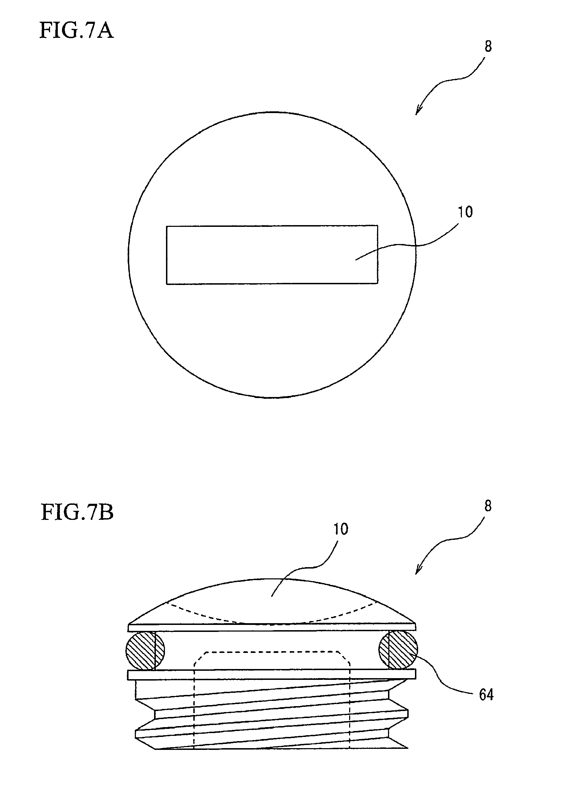

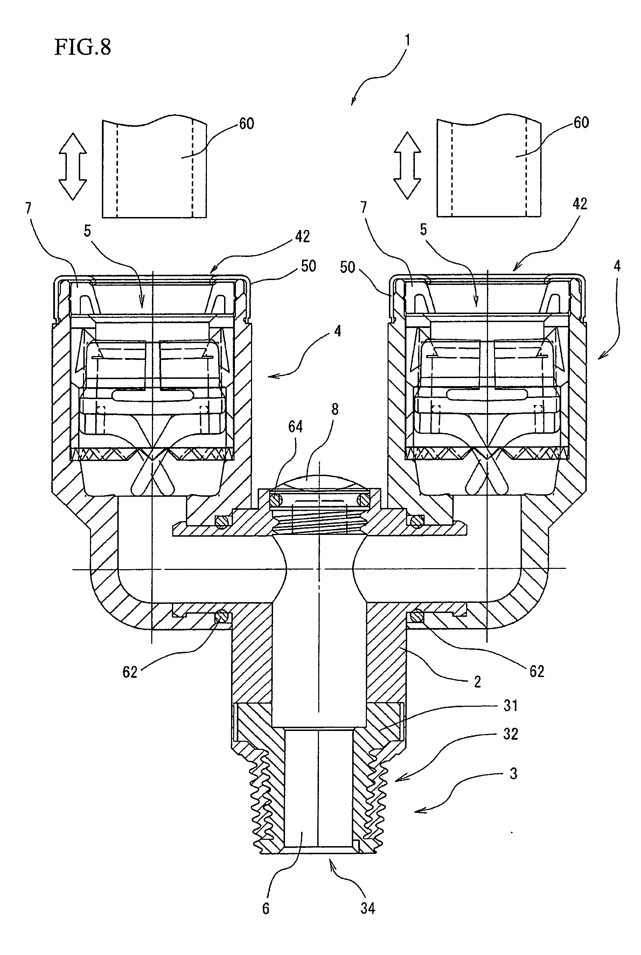

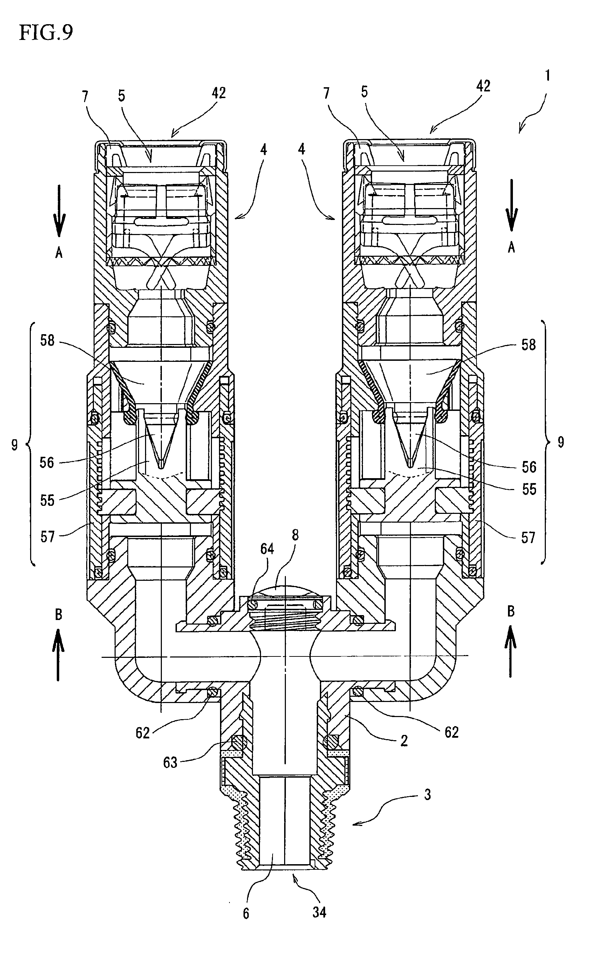

Hereinafter, embodiments of the preset invention will be described in detail referring to the drawings. Fig. 1 is a schematic view showing an example of tube fitting 1 according to a first embodiment of the present invention. Fig. 2 is a schematic view showing the structure of a fitting part 4 of the tube fitting 1, Fig 2a is a front sectional view, and Fig. 2b is a side view. Fig. 3 is a schematic view showing the structure of a body 2 of the tube fitting 1, Fig 3a is a front sectional view, and Fig. 3b is a side view. Fig. 4 is a schematic view showing the structure of an installation screw part 3 of the tube fitting 1, Fig 4a is a plan view, Fig. 4b is a front sectional view, and Fig. 4c a front view. Fig. 5a to Fig. 5d are perspective views showing examples of rotated state of the fitting part 4 of the tube fitting 1. Fig. 6 is a schematic view showing a state where the lid part 8 of the tube fitting 1 is removed. Fig. 7 is a schematic view showing the structure of the lid part 8 of the tube fitting 1, Fig. 7a is a plan view and Fig. 7b is a front view. Fig. 8 is a schematic view showing an example of modification of the tube fitting 1. Fig. 9 is a schematic view of an example of tube fitting 1 according to a second embodiment of the present invention.

As Fig. 1 shows, the tube fitting 1 according to the first embodiment of the present invention has such a structure that a fitting part 4 is provided at two places to connect/fix external tube 60 thereto at the rear end part 2b of the body 2, the installation screw part 3 is provided at the front end part 2a, and fluid passes inside.

In addition, the connection of the tube fitting 1 to a connecting opening where the fluid comes in and goes out in a external fluid apparatus (not shown) by the installation screw part 3 establishes a structure of a fluid path where external tube 60 is connected to the external fluid apparatus via the tube fitting 1.

The fitting part 4, as shown in Fig. 2, is provided with an opening part 42 in the rear end part 4b, the center axis of which is parallel with that of cylindrical part 41 (here, coincident), the external tube 60 is inserted from the opening part 42 of the fitting part 4 in the direction of the axis line.

On the other hand, the first connecting part 44 having an opening part 43 is provided in the front end part 4a. In the present embodiment, the center axis of the first connecting part 44 (here, coincident with the center axis of the opening part 43) is structured to be perpendicular to the center axis of the cylindrical part 41.

Here, the connection mechanism 5 (refer to Fig. 1) which is provided to connect/fix the external tube 60 in the fitting part 4 is sufficient if it is structured so that the connection/fixing function can be performed, and the structure is not restricted. Moreover, the symbol 7 denotes a packing made of rubber which is provided in the opening part 42, and the packing is stuck to the body 2 and the inserted external tube 60 without any gap to seal so that fluid which passes therethrough does not leak. In addition, in the opening part 42, a ring-shaped cap part 50 is provided for retaining the connection mechanism 5 and the packing 7 inside of the fitting part 4. Note that the symbol 40 denotes a pipe path.

In the rear end part 2b as shown in Fig. 3, the body 2 is provided with two second connecting parts 24 to which the fitting part 4 is connected at the position opposing each other sandwiching the center axis of the cylindrical part 21 (axially symmetric position).

Each of the second connecting parts 24 has an opening part 22 which opens outward in radial direction of the cylindrical part 21 with respect to the axis line, and at the same time an engaging projection 26 is provided at the front end part thereof, which is connected rotatably (rotation direction will be described later) with the engaging part 45 of the first connecting part 44 of the fitting part 4, and thereby, the connection of the body 2 with the fitting part 4 is achieved. Moreover, by this arrangement, the opening part 22 of the body 2 and the opening part 42 of the fitting part 4 are connected with each other and thus a flow passage of fluid is formed.

By the aforementioned connection arrangement, each of the two fitting parts 4 becomes capable of rotating independently with respect to the body 2. The rotation direction is such that the angle obtained between the center axis of the cylindrical part 41 of the fitting part 4 (here, coincident with the center axis of the opening part 42) and the center axis of the cylindrical part 21 of the body 2 (here, coincident with the center axis of the opening part 23) varies, that is to say, a locus of the rear end part 4b (the opening part 42) of the fitting part 4 generates a circle having the center axis of the second connecting part 24 of the body 2 (here, coincident with the center axis of the opening part 22) as a rotation center.

The range of rotation angle at that time is not particularly restricted. Whereby, it may be rotatable within 360° or rotatable within a discretionary range (for example, -90° to 90°, and the like).

It should be noted that sealing performance is secured by O-rings 62.

In addition, the tube fitting 1 provided with the above arrangement, as shown in Fig. 5a to Fig. 5d for example, allows conforming to various connecting directions of external tubes. That is, conventionally, the tube fitting has been arranged so that the total looks like Y-shaped (corresponding to Fig. 5a), the total looks like T-shaped (corresponding to Fig. 5b), both fitting parts integrally look like L-shaped (corresponding to Fig. 5c), both fitting parts integrally look like U-shaped (corresponding to Fig. 5d) etc, and consequently dies and production have been carried out as if each joint arrangement has been a different type of tube fitting. On the contrary, the tube fitting 1 according to the present embodiment has only one type, which, through rotation of the fitting part 4, brings about such effect that external tubes can be connected while changing into various shapes as exemplified in Fig. 5a to Fig. 5d. Consequently, production cost including die forming and installation cost can be reduced significantly.

Further, since the conventional tube fitting has had a fixed fitting part arrangement, there has been such a problem that the tube fitting had to be replaced with a different shaped one if flow direction of fluid was going to change due to specification change and the like of external fluid apparatus.

However, the tube fitting 1 according to the present invention can change the arrangement freely through rotation of the fitting part 4 depending on the direction of fluid, and thereby, the tube fitting can be used as it is even when the flow direction has to be changed due to specification change and the like.

On the other hand, the front end part 2a of the body 2 is provided with the third connecting part 25 to connect the installation screw part 3 thereto, and connection is implemented between the connecting part 25 and the fourth connecting part 35 of the installation screw part 3.

Note that the body 2 is structured, as one example, using PBT (polybutylene terephthalate) which is excellent in thermal stability, dimensional accuracy and electrical characteristic.

Here, the installation screw part 3, as shown in Fig. 4, is provided with the fourth connecting part 35 to connect the body 2 thereto at the rear end part 3b.

An engaging projection 36 is provided at the front end part of the fourth connecting part 35, and is engaged rotatably (rotation direction will be described later) with the engaging part 27 of the third connecting part 25 of the body 2, and thus connection of the body 2 and the installation screw part 3 is implemented. By this arrangement, the opening part 23 of the body 2 and the opening part 33 of the installation screw part 3 are connected and a flow passage of fluid is formed.

It should be noted that the fourth connecting part 35 may be formed as a separated piece to be connected to the rear end part 3b, or as the present embodiment, one piece configuration may be formed continuing to an insert core 31 to arrange to extend toward the direction of the body 2 from the rear end part 3b.

By the aforementioned connection arrangement, the installation screw part 3 becomes rotatable with respect to the body 2. As for the rotation direction, the center axis of the insert core 31 of the installation screw part 3 (here, coincident with the center axis of the opening part 33 and 34), and the center axis of cylindrical part 21 of the body 2 (here, coincident with the center axis of the opening part 23) rotate coaxially. Note that sealing performance of the connecting portion is secured by an O-ring 63.

According to this arrangement, for example, in a case of installation in a tight space and even if the fitting part 4 cannot rotate, keeping the direction of the fitting part 4 fixed, it is possible to rotate only the installation screw part 3, consequently it becomes possible to install the tube fitting 1.

Further more, since the installation screw part 3 can be standardized for mass production, production cost can be reduced while tackling with wide variety types of the fitting part 4 which is provided in the body 2.

Note that, as an example of modification, such structure can be also considered that the cylindrical part 21 of the body 2 and thread 32 of the installation screw part 3 are formed in one piece (refer to Fig. 8). According to this arrangement, reduction of item number of components and number of processes becomes feasible, thereby, production cost can be depressed further.

In addition, as shown in Fig. 4, the installation screw part 3 has thread 32 in external circumference, and at the same time inside thereof has a tool connecting part 37 to connect a rotation tool for rotating the installation screw part 3 as well as pipe path 30 for fluid passage.

Specifically, the installation screw part 3 is structured so that thread 32 is formed without gap on the external circumference of the insert core 31 to be arranged as a male screw. In addition, the insert core 31 is provided with a larger diameter part 38a at the position of front end part 3a and a larger diameter part 38b at the position of rear end part 3b (may be at a central part closer to the front end part 3a rather than at the rear end part 3b), sandwiching the thread 32 at the front end part and the rear end part thereof in the direction of the axis.

Meanwhile, the thread 32 is made of softer material than the insert core 31. Owing to this, in particular, significant effect is brought about when the thread 32 is formed in tapered screw shape. More specifically, when fastening, effect of compression force in radial direction deforms the thread 32 made of soft material, so that the thread 32 conforms to the shape of mating thread (here, female thread) to fill up gap and adhere tightly, sealing performance is improved significantly. It should be noted that soft material tends to cause deformation, in so-called flowing out manner in the both directions of screw-in and the reverse direction by compression force of radial direction. In the present embodiment, however, such an arrangement is adopted that both ends of the thread 32 are sandwiched by the larger diameter parts 38a and 38b which are provided at the front end part 3a and the rear end part 3b in the insert core 31, therefore such deformation is prevented and loose of tightening caused by deformation is avoided for long time.

In order to prevent the aforementioned deformation, it is preferable to arrange so that at the position where the deformation occurs, that is, the external diameter position of the crest part 32a and root part 32b of the thread 32, sandwiching-like performance by the larger diameter 38a and 38b is carried out. However, if the external diameters of the larger diameter 38a and 38b are formed larger than the crest part 32a of the thread 32, sandwiching performance is satisfied, but if the larger diameter part 38a of the front end part 3a becomes larger than the thread 32, engagement with female screw comes to be impossible. Therefore, such arrangement can be said optimal for prevention of the deformation through contacting the whole area of the both ends of the thread 32, that the larger diameter part 38b has a larger diameter than the crest part 32a of the thread 32 and the larger diameter part 38a has the same diameter with the crest part 32a of the thread 32. To realize this arrangement, in the present embodiment especially, on the external peripheral of larger diameter part 38a of the front end part 3a in the insert core 31, the thread 39 which is connected continuously to the thread 32 is formed. That is to say, the crest part 32a and root part 32b of the thread 32 and the crest part 39a and root part 39b of the thread 39 are formed respectively to be connected continuously to work as one screw in one piece, and at the same time the external diameter of the larger diameter part 38a is optimized (maximized) within allowable range.

Here, as examples of material to be used, it is preferable that the insert core 31 is made of polyamide MXD 6 resin, or polyphenylene sulfide. Polyamide MXD 6 resin is outstanding in strength, thermal resistance, elastic strength, chemical resistance, and dimensional stability, accordingly that material can be used for connection to a tool and used with a tool. That material tolerates high load in case of usage for screw member material, moreover 50% inclusion of glass fiber enhances performance further more. Most preferable material is "Reny" (registered trade mark of Mitubishi Gas Chemical Company, Inc.). Polyphenylene sulfide resin has extremely high strength and rigidity as well as excellent wear resistance. Although toughness is inferior to polyamide MXD 6 resin, it has superior food safe performance, thereby Food and Drug Administration (FDA) and National Science Foundation (NSF) approve its usage for food equipment and kitchen utensils as well as for a part contacting with drinking water supply, and therefore, the material comes to the most preferable one depending on usage of the screw.

Meanwhile, for the thread 32, polybutylene terephthalate is preferable. Since it is excellent in thermal stability, dimensional accuracy, and electric characteristic, it is preferable to use as material of screw part in external circumference area.

By the aforementioned structure, it becomes possible to form the installation screw part with resin material which has been metal material in the conventional tube fitting, and while realizing a structure that can tolerate a high torque in installation, reduction of production cost can be achieved.

In addition, the installation screw part 3 according to the present embodiment can achieve high sealing performance and long term loose prevention, and therefore it is preferable to use as pipe thread. Further, if the installation screw part 3 is arranged to conform to the JIS B 0203 and the similar standard as a male tapered pipe thread, versatility can be improved.

Incidentally, concerning with an installation screw part for connecting the tube fitting to the external fluid equipment, it has been usual conventionally that the tool connecting part for connecting a rotation tool is provided at external circumference part, because a pipe path is provided inside. However, in the tube fitting 1 according to the present embodiment, the fitting part 4 is provided in rotatable manner and thereby if the tool connecting part is provided at the external circumference part, it is assumed that there would be such a problem that the tool connecting part abuts against the cylindrical part 41 of the fitting part 4, depending on the installation position of the external tube or rotating position (angle) of the fitting part 4, and it becomes impossible or difficult to connect/rotate a tool.

Further, as the present embodiment in a case where the external circumference part of the installation screw part 3, or the thread 32, is made of a soft material, it is not suitable to form a tool connecting part. On the other hand, if the insert core 31 is arranged to extend toward the rear end part 3b from the extended part of the thread 32 so that the tool connecting part is formed in the extended part, compactness falls short.

Consequently, in the present embodiment, the above problem has been solved by provision of an arrangement inside of the installation screw part 3 such that both functions of the pipe path and the tool connecting part can work simultaneously.

More specifically, a through hole 6 having a polygonal section for both function of the pipe path 30 and the tool connecting part 37 for the purpose of connecting (inserting) the rotation tool to rotate the installation screw part 3 simultaneously is provided inside of the insert core 31 of the installation screw part 3 so that the through hole 6 passes through the diameter center of the insert core 31 along the axis direction. That is, it is a structure that a through hole 6 which becomes a tool connecting part 37 shares a part of the pipe path 30. Here, the center axis of the through hole 6 is arranged to coincide with the center axis of the thread 32.

As one example, the through hole 6 is formed to be a regular hexagonal section in a part or the whole of the axial direction, which makes possible to use a general purpose hexagonal wrench 61 for tightening (refer to Fig. 6). However, the sectional shape of the through hole 6 is not limited to regular hexagon, but other polygon shapes (for example, including star-shape and the like), or other curvilinear shapes rather than regular circle shape such as an oval and the like may be adopted.

Owing to the above arrangement, it becomes possible to insert a rotation tool such as a hexagon wrench and the like inside the installation screw part 3 in the direction of the axis to connect (insert) to the tool connecting part 37 and rotate the installation screw part 3, and thereby the tube fitting 1 can be fit by rotating the installation screw part 3 without any influence of the position (angle) of the fitting part 4 provided rotatably on the body 2.

In addition, even in a tight space, it can exclude the case where the installation is not possible due to the fact that the rotation tool can not rotate as in a conventional case, and the fitting can be carried out easily.

Further, since use of an electrical rotation tool comes to possible, fitting can be done easily and in short time.

In addition, as a distinctive arrangement of the present embodiment, a tool insertion opening 28 with a dimension as large as to insert and rotate a rotation tool is provided in the body 2. As one example, as shown in Fig. 1, Fig. 6, and Fig. 7, the tool insertion opening 28 is provided in the body 2 so that the center axis thereof coincides with the center axis of the through hole 6 of the installation screw 3 which is connected to the body 2. Further, the pipe path 20 provided inside of the body 2 so that the center axis thereof coincides with the center axis of the through hole 6 and the pipe path 30 provided in the installation screw part 3 are used as an insertion passage way of the rotation tool simultaneously. In this way, the insertion passage way of the rotation tool starting from the tool insertion opening 28, passing the pipe path 20 and the pipe path 30, up to the through hole 6 is structured.

It should be noted that if the rotation tool can be inserted and rotated, it is not essential for the center axis of the tool insertion opening 28, pipe path 20 and pipe path 30 to coincide with the center axis of the through hole 6, and shape thereof is not to be restricted specifically.

Meanwhile, as the tool insertion opening 28 has to be sealed when fluid passes, a lid part 8 which can seal and open the tool insertion opening 28 is provided. In the present embodiment, O-ring 64 is provided between the tool insertion opening 28 and the lid part 8 to seal for avoiding fluid leakage. Here, Fig. 1 shows a state that the lid part 8 is installed and Fig. 6 shows a state that the lid part 8 is removed.

It should be noted that fastening method of the lid part 8 and the tool insertion opening 28 is made to be an engaging system by means of screw, but not limited to this. At the same time, fastening tool may be a screwdriver, a wrench and the like, and any type will do if the upper face of the lid part 8 is formed to be a tool connecting shape corresponding to the tool.

As one example, as shown in Fig. 7, in the present embodiment, the shape for tool connection on the upper face of the lid part 8 is arranged to be a slot shape of symbol minus (symbol 10) so that a general purpose flathead screw driver can rotate the lid part 8. As another example, instead of the minus shape, if the slot is arranged to have a regular hexagonal shape which is the same shape and dimension as a section (regular hexagon)of the through hole 6, a common rotation tool (hexagonal wrench) can rotate the both, which is extraordinarily efficient.

Hereafter, a tube fitting 1 according to the second embodiment will be described.

The tube fitting of the present embodiment is based on a structure according to the first embodiment, and has such a structure that a flow rate control mechanism 9 which controls flow rate of passing fluid is provided between the respective fitting part 4 and a body 2. Various structures can be devised for the flow rate control mechanism. For example, as shown in Fig. 9, there is such a structure that a needle 55 provided with a V-shaped notch part 56 is moved in the direction of the axis using a control dial 57, and a passage way area of fluid which is formed by the notch part 56 and a check valve 58 is increased or decreased, and thus the flow rate of the passing fluid is controlled. Note that, in the drawing, arrow A shows a controlled flow and arrow B shows a free flow. According to this structure, flow rate control can be performed at respective fitting part 4 in addition to the fact that the similar effect as the first embodiment can be obtained.

As described so far, according to the present invention, it becomes possible to vary the rotation position (angle) of the fitting part with respect to the body, and thus it becomes possible to change the connecting direction of the external tube. Especially, the external tube connection can be varied in various shapes through independent rotation of plural fitting parts respectively.

Furthermore, since it becomes possible to insert a rotation tool in the installation screw part along the axis direction to connect with the tool connecting part thereof so that the installation screw part can be rotated, the installation of the tube fitting can be fit through rotating of the installation screw part without influence of the position (angle) of the fitting part which is provided rotatably with respect to the body. In addition, even in a tight space area, inability of installation due to the fact that the rotation tool can not be rotated as in a conventional case can be avoided and easy installation can be achieved.

The description has been made taking an example of the case where there are two fitting parts, but not limited to that case.

## Claims

1. A tube fitting (1), comprising: a fitting part (4) at one end side of a body (2) and a installation screw part (3) at the other end side thereof, wherein
the body (2) includes a pipe path (20), inside of which fluid passes,
the fitting part (4) includes an opening part (42) at a rear end (4b) thereof, to which external tube (60) is inserted, and a pipe path (40), inside of which fluid passes, the fitting part (4) being connected to a connecting part (24) provided in a side part of the body (2) so that the fitting part (4) is rotatable in a direction where an angle between center axis of the opening part (42) and center axis of the installation screw part (3) varies,
one end of a pipe path (40) of the fitting part (4) communicates with the opening part (42) and the other end of the pipe path (40) communicates with the pipe path (40)of the body (2) via the connecting part (24),
the installation screw part (3) includes thread (32, 39) in external circumference, a tool connecting part (37) inside to connect a rotation tool (61) to rotate the installation screw part (3), and a pipe path (30) where fluid passes, and
the body (2) is provided with a tool insertion opening (28) with a dimension as large as capable of inserting and rotating the rotation tool (61), and
a lid part (8) which can seal and open the tool insertion opening (28).

2. The tube fitting (1) according to claim 1, wherein the fitting part (4) is provided in plurality.

3. The tube fitting (1) according to one of claims 1 or 2, wherein the fitting part (4) is provided in two places which oppose each other sandwiching the body (2) and each fitting part (4) is rotatable independently.

4. The tube fitting (1) according to any one of claims 1-3, wherein the body (2) and the installation screw part (3) are connected rotatably with each other so that both can rotate coaxially.

5. The tube fitting (1) according to any one of claims 1-4, wherein a part or a whole of pipe path (30) of the installation screw part (3) is formed in a shape such that a rotation tool (61) to rotate the installation screw part (3) can be connected and is used simultaneously as the tool connecting part (37).

6. The tube fitting (1) according to claim 5, wherein a portion in the pipe path (30) of the installation screw part (3) which is used simultaneously as the tool connecting part (37) is formed to be a shape of through hole (6), the section of which is a polygon or an oval.

7. The tube fitting (1) according to any one of claims 1-6, wherein a flow rate control mechanism (9) to control flow rate of passing fluid is provided between the fitting part (4) and the installation screw part (3).
